# EUROPÄISCHE PATENTANMELDUNG

(11) **EP 1 298 905 A2**
(43) Veröffentlichungstag der Anmeldung: **02.04.2003**
(21) Anmeldenummer: 02102353.6
(22) Anmeldetag: 12.09.2002
(51) Int. Cl.: H04M 3/56, H04M 7/00, H04L 12/18

(54) **Verfahren zum Austausch von Daten zwischen einem graphischen Benutzeroberflächenmodul und einer Multimediatelekommunikationsplattform**

(30) Priorität: 26.09.2001 DE 10147495
(71) Anmelder: SIEMENS AKTIENGESELLSCHAFT, 80333 München (DE)
(72) Erfinder: Guan, Qi, Dr., 1210 Wien (AT); Hosp, Josef, 2232 Deutsch Wagram (AT)

(57) **Zusammenfassung**

Ein Verfahren und ein Multimediatelekommunikationssystem (SYS) zum Austausch von Daten zwischen einem auf einem Telekommunikationsendgerät (COM) abgelegten graphischen Benutzeroberflächenmodul (GUI) und einer zu einer multimedialen Nachrichtenübertragung in einem Datennetz (DAT) eingerichteten Multimediakommunikationsplattform (SSUA), wobei der Datenaustausch zwischen dem Benutzeroberflächenmodul (GUI) und der Multimedia-Plattform (SSUA) über ein lokal auf dem Telekommunikationsendgerät (COM) abgelegtes Interface-File (IFF) erfolgt.

## Beschreibung

Verfahren zum Austausch von Daten zwischen einem graphischen Benutzeroberflächenmodul und einer Multimediatelekommunikationsplattform

Die Erfindung betrifft ein Verfahren zum Austausch von Daten in einem Multimediatelekommunikationssystem mit zumindest einem Telekommunikationsendgerät und einer zu einer multimedialen Nachrichtenübertragung in einem Datennetz eingerichteten Multimediakommunikationsplattform, wobei das Telekommunikationsendgerät ein graphisches Benutzeroberflächenmodul aufweist.

Weiters betrifft die Erfindung ein Multimediatelekommunikationssystem mit einer zur multimedialen Nachrichtenübertragung vorgesehenen Multimediakommunikationsplattform und einem Datennetz mit zumindest einem Telekommunikationsendgerät, welches ein graphisches Benutzeroberflächenmodul aufweist. Multimediatelekommunikationsplattformen sind in großer Zahl bekannt geworden. Ein Beispiel für eine solche Plattform stellt beispielsweise "ICQ" der Firma ICQ Inc. dar. Andere Plattformen sind z. B. "NetMeeting" der Firma Microsoft bzw. "Netscape Cooltalk".

Nachteilig an den bekannten Multimediatelekommunikationssystemen ist jedoch, dass ihre Benutzeroberflächen "starr" mit der darunterliegenden Multimediatelekommunikationsplattform verbunden sind. D. h. um die Benutzeroberfläche zu verändern muss der Quellcode der Multimediatelekommunikationsplattform verändert werden, was die Anpassung an spezielle Wünsche betreffend die Gestaltung der Benutzeroberfläche seitens von Käufern solcher Multimediasysteme erschwert. Der zusätzliche Programmieraufwand kann den Endpreis für derartige Multimediasysteme wesentlich erhöhen, was zu einer geringeren Kundenakzeptanz und Wettbewerbsfähigkeit führt.
Es ist daher eine Aufgabe der Erfindung einen Weg zu schaffen der es ermöglicht, auf einfache Weise eine Benutzeroberfläche für ein Multimediatelekommunikationssystem zu schaffen, ohne den Quellcode der darunterliegenden Multimediatelekommunikationsplattform verändern zu müssen und eine Multimediakommunikation zwischen Telekommunikationsendgeräten, die mit der Multimediaplattform verbunden sind zu ermöglichen.

Diese Aufgabe wird mit einem der Verfahren der eingangs genannten Art erfindungsgemäß dadurch gelöst, dass der Datenaustausch zwischen dem Benutzeroberflächenmodul und der Multimedia-Plattform über ein lokal auf dem Telekommunikationsendgerät abgelegtes Interface-File erfolgt.

Da die Kommunikation zwischen dem Benutzeroberflächenmodul und der darunterliegenden Multimediatelekommunikationsplattform über ein Interfacefile stattfindet, kann die Benutzeroberfläche beliebig verändert werden, ohne dass in den Quellcode der Multimediaplattform eingegriffen werden muss. Über die Benutzeroberfläche eingegebene Befehle bzw. Parameter können in das Interface geschrieben werden, von wo aus sie von der Multimediatelekommunikationsplattform ausgelesen und weiter verarbeitet werden. Auf diese Weise kann ein von der Benutzeroberfläche und der Multimediaplattform unabhängiges Kommunikationsprotokoll zwischen diesen Komponenten eines Multimediatelekommunikationssystems geschaffen werden. Durch die Zwischenschaltung eines Interfacefiles zwischen das Benutzeroberflächenmodul und die Multimediatelekommunikationsplattform, werden diese beiden Komponenten voneinander entkoppelt, sodass sich eine Änderung des Benutzeroberflächenmoduls nicht auf die Multimediatelekommunikationsplattform auswirkt.

In einer vorteilhaften Ausführungsform der Erfindung ist das Interfacefile ein Text- oder Binaryfile.
Bevorzugterweise wird das Benutzeroberflächenmodul auf Anforderung von einem Service Provider zugeordneten Server auf das Telekommunikationsendgerät über das Datennetz übertragen und dort als Plugin oder Java Applet in einen Browser, der zur Darstellung von in dem Datennetz abgelegten Webseiten eingerichtet ist, installiert. Die soeben erwähnten Variante ermöglicht es, ein Benutzeroberflächenmodul, welches die gewünschte Benutzeroberfläche enthält, auf einem Multimediaserver abzulegen, bei Bedarf an einen "Client" zu übertragen und dort zu installieren.

Unter einem Browser wird in diesem Dokument ein Navigations-Programm, das in einem Datennetz, wie dem Internet HTML-Dokumente interpretieren und darstellen kann, verstanden. Bekannte Browser sind beispielsweise die Browser von Netscape, Mosaic und der Microsoft Explorer. Ein Browser ist ein zumeist einfach zu bedienendes Programm mit grafischer Benutzeroberfläche, mit dem man sich auf einfache Weise einen Überblick über große Datenbestände verschaffen kann.

Eine bevorzugte Variante der Erfindung sieht vor, dass die Multimediakommunikationsplattform zumindest einen auf zumindest einem Telekommunikationsendgerät abgelegten Clientteil und einem auf dem Multimediaserver abgelegten Serverteil aufweist, wobei diese beiden Teile der Multimediakommunikationsplattform dazu eingerichtet sind miteinander Daten auszutauschen.

Eine vorteilhafte Variante der Erfindung sieht vor, dass auf Anforderung der Clientteil von dem Multimediatelekommunikationsserver über das Datennetz auf das Telekommunikationsendgerät heruntergeladen wird, wobei der Clientteil das Interfacefile erzeugen und lesen kann.

Bevorzugterweise ist das Datennetz das Internet.

Weitere Vorteile lassen sich dadurch erzielen, dass das Telekommunikationsendgerät seine Adresse in dem Datennetz sowie Informationen über den Typ seines Browsers an den Multimediatelekommunikationsserver überträgt, wobei der Multimediatelekommunikationsserver anhand der an ihn von dem Telekommunikationsendgerät übermittelten Informationen, betreffend den Browser, den Clientteil erzeugt und an das Telekommunikationsendgerät überträgt.

In einer weiteren Variante der Erfindung sind zumindest zwei Telekommunikationsendgeräte vorgesehen, die zum gegenseitigen Austausch von Daten über das Datennetz eingerichtet sind, wobei zumindest ein erstes der beiden Telekommunikationsendgeräte ein mit der Multimediaplattform über das Interfacefile verbundenes Benutzeroberflächenmodul aufweist, und über dieses Oberflächenmodul ein Befehl zur Erzeugung einer Verbindung zwischen den Telekommunikationsendgeräten und eine Adresse eines zweiten Telekommunikationsendgerätes eingegeben und in das Interfacefile geschrieben werden, worauf der Clientteil des ersten Telekommunikationsendgerätes das Interfacefile ausliest und den Befehl und die Adresse an den Serverteil übermittelt, wobei der Multimediaserver eine Datenaustauschinitialisierungsnachricht an das zweite Telekommunikationsendgerät übermittelt, wobei nach Zustellung der Datenaustauschinitialisierungsnachricht an das zweite Telekommunikationsendgerät Multimedianachrichten zwischen den Telekommunikationsendgeräten über die Multimediatelekommunikationsplattform austauschbar sind.

Weitere Vorteile lassen sich dadurch erzielen, dass zumindest zwei Telekommunikationsendgeräte vorgesehen sind, die zum gegenseitigen Austausch von Daten über das Datennetz eingerichtet sind, wobei zumindest ein erstes der beiden Telekommunikationsendgeräte ein mit der Multimediaplattform über das Interfacefile verbundenes Benutzeroberflächenmodul aufweist, und von dem zweiten Telekommunikationsendgerät eine Datenaustauschinitialisierungsnachricht an den Serverteil der Multimediatelekommunikationsplattform übermittelt wird, worauf der Serverteil einen Befehl zur Erzeugung einer Verbindung zwischen den beiden Telekommunikationsendgeräten an den Clientteil des ersten Telekommunikationsendgerätes übermittelt, der den Befehl in das Interfacefile des angerufenen Telekommunikationsendgerätes schreibt und das Interfacefile von dem Benutzeroberflächenmodul ausgelesen wird, wobei nach Auslesen des Befehls Multimedianachrichten zwischen den beiden Telekommunikationsendgeräten über die Multimediakommunikationsplattform austauschbar sind.

Günstigerweise kann der Nachrichtenaustausch zwischen den beiden Telekommunikationsendgeräten in Form eines Mediastreamings erfolgen.

Der Befehl zur Herstellung einer Verbindung zwischen den Telekommunikationsendgeräten kann an den Clientteil des angerufenen Telekommunikationsendgerätes übermittelt werden, und von diesem Clientteil in das lokal auf dem angerufenen Telekommunikationsendgerät abgelegte Interfacefile geschrieben und von dem graphischen Benutzeroberflächenmodul ausgelesen und eine Ausgabemeldung erzeugt werden, dass das anrufende Telekommunikationsendgerät einen Nachrichtenaustausch initialisiert hat.

Günstigerweise kann über das Benutzeroberflächenmodul des angerufenen Telekommunikationsendgerätes ein Befehl zur Annahme oder zur Ablehnung des Nachrichtenaustausches mit dem anrufenden Telekommunikationsendgerätes eingegeben werden.

Weiters kann der Datenaustausch zwischen dem Serverteil und dem zumindest einem Clientteil über eine interne Schnittstelle der Multimediakommunikationsplattform erfolgen, wobei die interne Schnittstelle ein Interfacefile sein kann.

Bei Eingabe eines Befehls zur Annahme des Nachrichtenaustausches mit dem anrufenden Telekommunikationsendgerät kann der Clientteil des angerufenen Telekommunikationsendgerätes eine Nachricht zur Herstellung einer Datenverbindung zwischen dem Clientteil des anrufenden Telekommunikationsendgerätes und dem Clientteil des angerufenen Telekommunikationsendgerätes an den Serverteil der Multimediakommunikationsplattform übermitteln.
Bevorzugterweise ist an jeden Clientteil der Multimediaplattform je zumindest ein Multimedia-Ein/ausgabegerät angeschlossen, wobei die Datenübertragung zwischen den Telekommunikationsendgeräten nach einem SIP- oder H.323 Protokoll erfolgen kann.

Zur Durchführung des erfindungsgemäßen Verfahrens eignet sich insbesondere ein Multimediatelekommunikationssystem der eingangs genannten Art, welches dazu eingerichtet ist, den Datenaustausch zwischen dem Benutzeroberflächenmodul und der Multimediakommunikationsplattform über ein lokal auf dem Telekommunikationsendgerät abgelegtes Interface-File durchzuführen.

In einer vorteilhaften Variante der Erfindung ist das Interfacefile ein Text- oder Binaryfile.

Bevorzugterweise ist das Multimediatelekommunikationssystem dazu eingerichtet, auf Anforderung das Benutzeroberflächenmodul von einem einem Serviceprovider zugeordneten Server auf das zumindest eine Telekommunikationsendgerät über das Datennetz zu übertragen und dort als Plugin oder Java Applet in einen Browser zu installieren.

Eine vorteilhafte Variante der Erfindung sieht vor, dass die Multimediakommunikationsplattform einen auf dem Telekommunikationsendgerät abgelegten Clientteil und einem auf einem Mulitmediaserver abgelegten Serverteil aufweist, wobei diese beiden Teile der Multimediaplattform dazu eingerichtet sind miteinander Daten auszutauschen.

Das Telekommunikationsendgerät kann dazu eingerichtet sein, den Clientteil von dem Multimediatelekommunikationsserver über das Datennetz herunterzuladen, wobei der Clientteil dazu eingerichtet sein kann, das Interfacefile zu erzeugen und zu lesen.

Bevorzugterweise ist das Datennetz das Internet.

Das Telekommunikationsendgerät kann dazu eingerichtet sein, seine Adresse in dem Datennetz und Informationen über den Typ seines Browsers an den Multimediakommunikationsserver zu übertragen, wobei der Multimediakommunikationsserver dazu eingerichtet sein kann, anhand der an ihn von dem Telekommunikationsendgerät übermittelten, den Browser betreffenden Informationen den Clientteil zu erzeugen und an das Telekommunikationsendgerät zu übertragen.

Eine weitere Variante der Erfindung besteht darin, dass zumindest zwei Telekommunikationsendgeräte vorgesehen sind, die dazu eingerichtet sind, über das Datennetz und die Multimediatelekommunikationsplattform miteinander Daten auszutauschen, wobei zumindest ein erstes Telekommunikations endgerät ein graphische Benutzeroberflächenmodul aufweist, und das Multimediatelekommunikationssystem dazu eingerichtet ist, einen Befehl zur Erzeugung einer Verbindung zwischen dem ersten Telekommunikationsendgerät und einem von diesem angerufenen, zweiten Telekommunikationsendgerät sowie die Adresse des zweiten Telekommunikationsendgerätes in dem Datennetz über das graphische Benutzeroberflächenmodul des ersten Telekommunikationsendgerätes entgegenzunehmen und in das Interface-File des ersten Telekommunikationsendgerätes zu schreiben, wobei der Clientteil des anrufenden Telekommunikationsendgerätes, dazu eingerichtet ist, das Interfacefile auszulesen und den Befehl und die Adresse des zweiten Telekommunikationsendgerätes an den Serverteil der Multimediatelekommunikationsplattform zu übermitteln, und der Multimediatelekommunikationsserver dazu eingerichtet ist, bei Erhalt der Adresse und des Befehls eine Datenaustauschinitialisierungsnachricht zu erzeugen und an das zweite Telekommunikationsendgerät zu übermitteln, wobei das Multimediatelekommunikationssystem weiters dazu eingerichtet ist, nach Zustellung der Datenaustauschinitialisierungsnachricht über die Multimediakommunikationsplattform Multimedianachrichten zwischen den beiden Telekommunikationsendgeräten auszutauschen.

Weiters kann das Multimediatelekommunikationssystem dazu eingerichtet sein, von dem zweiten Telekommunikationsendgerät eine Datenaustauschinitialisierungsnachricht an den Serverteil der Multimediatelekommunikationsplattform zu übermitteln, wobei der Serverteil dazu eingerichtet sein kann, einen Befehl zur Erzeugung einer Verbindung zwischen den beiden Telekommunikationsendgeräten an den Clientteil des ersten Telekommunikationsendgerätes zu übermitteln, der dazu eingerichtet sein kann, den Befehl in das Interfacefile des angerufenen Telekommunikationsendgerätes zu schreiben, wobei das Interfacefile von dem Benutzeroberflächenmodul ausgelesen werden kann, und das Multimediatelekommunikationssystem weiters dazu eingerichtet sein kann, nach Auslesen des Befehls Multimedianachrichten zwischen den beiden Telekommunikationsendgeräten über die Multimediakommunikationsplattform auszutauschen.

In einer günstigen Variante der Erfindung können die Nachrichten zwischen den beiden Telekommunikationsendgeräten in Form eines Mediastreaming ausgetauscht werden.

Weiters kann das Multimediatelekommunikationssystem dazu eingerichtet sein, den Befehl zum Aufbau einer Verbindung an den Clientteil des angerufenen Telekommunikationsendgerätes zu übermitteln und der Clientteil dazu eingerichtet sein, den Befehl in das lokale Interfacefile des angerufenen Telekommunikationsendgerätes zu schreiben, wobei das graphische Benutzeroberflächenmodul des angerufenen Telekommunikationsendgerätes kann dazu eingerichtet sein, den Befehl aus dem Interfacefile auszulesen und eine Ausgabemeldung, dass das anrufende Telekommunikationsendgerät einen Nachrichtenaustausch initialisiert hat, zu erzeugen.

Das Benutzeroberflächenmodul des angerufenen Telekommuni kationsendgeräte kann dazu eingerichtet sein, eine Anforderung zur Annahme oder zur Ablehnung des Nachrichtenaustausches mit dem anrufenden Telekommunikationsendgerät entgegenzunehmen.

Darüber hinaus kann das Multimediatelekommunikationssystem dazu eingerichtet sein, bei Eingabe der Anforderung zur Annahme des Nachrichtenaustausches dem Serverteil der Multimediakommunikationsplattform eine Nachricht zur Herstellung einer Datenverbindung zwischen dem Clientteil des anrufenden Telekommunikationsendgerätes und dem Clientteil des angerufenen Telekommunikationsendgerätes zu übermitteln.

Vorteilhafterweise ist an die Clientteile der Multimediakommunikationsplattform je zumindest ein Multimedia-Ein/ausgabegerät angeschlossen, wobei die Multimediaplattform dazu eingerichtet sein kann, den Datenaustausch zwischen dem Serverteil und den Cliententeilen über eine interne Schnittstelle der Multimediatelekommunikationsplattform durchzuführen, wobei die interne Schnittstelle ein Interfacefile sein kann.

Weiters kann das Multimediatelekommunikationssystem dazu eingerichtet sein, den Datenaustausch zwischen den Telekommunikationsendgeräten gemäß einem SIP- oder H.323-Protokoll durchzuführen.

Die Erfindung samt weiteren Vorteilen wird im folgenden anhand einiger nicht einschränkender Ausführungsbeispiele näher erläutert, die in der Zeichnung dargestellt sind, in dieser zeigen schematisch:
Fig. 1 eine erfindungsgemäßes Multimediatelekommunikationssystem;
Fig. 2 ein Ablaufdiagramm des erfindungsgemäßen Verfahrens;
Fig. 3 eine Multimediaplattform;
Fig. 4 ein Ablaufdiagramm eines Verbindungsaufbaus zwischen einem ersten Telekommunikationsendgerätes und einem zweiten Telekommunikationsendgerät;
Fig. 5 ein weiteres Ablaufdiagramm eines Verbindungsaufbaus zwischen einem ersten Telekommunikationsendgerätes und einem zweiten Telekommunikationsendgerät;
Fig. 6 ein Ablaufdiagramm einer Beendigung einer Verbindung zwischen einem ersten Telekommunikationsendgerätes und einem zweiten Telekommunikationsendgerät und
Fig. 7 ein weiteres Ablaufdiagramm einer Beendigung einer Verbindung zwischen einem ersten Telekommunikationsendgerätes und einem zweiten Telekommunikationsendgerät;

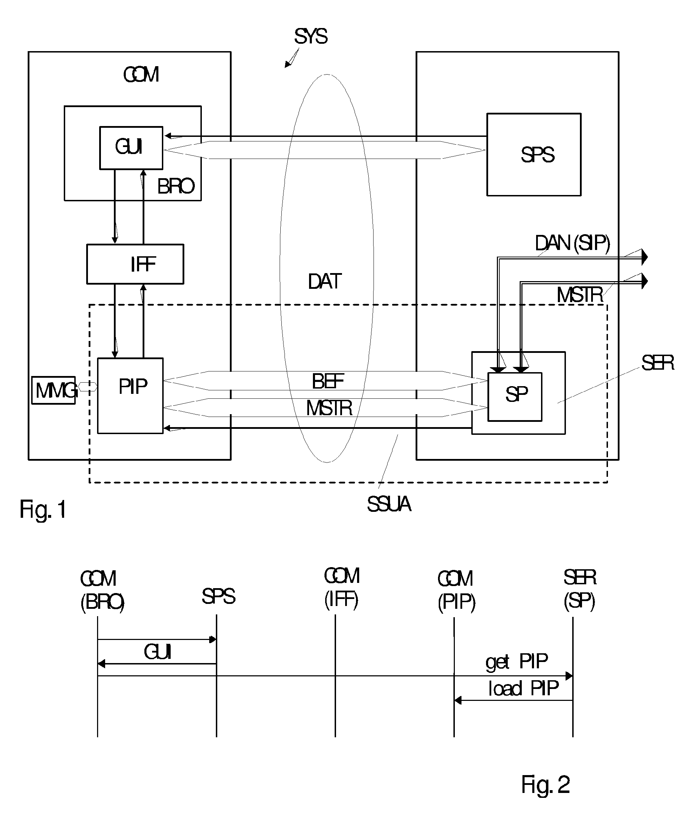

Gemäß Fig. 1 weist ein erfindungsgemäßes Multimediatelekommunikationssystem SYS zumindest ein Telekommunikationsendgerät COM auf welches über ein Datennetz DAT, bevorzugterweise das Internet, mit einem Multimediatelekommunikationsserver SER verbunden ist.

Das Telekommunikationsendgerät weist ein Benutzeroberflächenmodul GUI auf, welches dazu eingerichtet ist, mit einer Multimediatelekommunikationsplattform SSUA Daten über ein Interfacefile IFF auszutauschen.
Die Multimediatelekommunikationsplattform SSUA kann ein Programm sein, welches zumindest teilweise auf dem Telekommunikationsendgerät COM, vorzugsweise einem handelsüblichen Computer, abläuft.

Das von einem Serviceanbieter gestaltete Benutzeroberflächenmodul GUI ist nicht in der Multimediatelekommunikationsplattform implementiert, sondern läuft, wie weiter unten beschrieben als Plugin in einem in dem Telekommunikationsendgerät COM installierten Browser BRO ab, beispielsweise in einem bekannten Internetbrowser wie Netscapenavigator oder Microsoft Internetexplorer. Das Benutzeroberflächenmodul GUI kann auch als Java Applet in dem Browser ablaufen.

Die Multimediakommunikationsplattform SSUA weist einen auf dem Telekommunikationsendgerät abgelegten Clientteil PIP und einem auf dem Multimediaserver SER abgelegten Serverteil SP auf, wobei diese Teile der Multimediakommunikationsplattform SSUA dazu eingerichtet sind miteinander Daten auszutauschen, beispielsweise gemäß dem weiter unten erläuterten SIP-Protokoll. Über die Multimediaplattform SSUA können auch Daten in Form eines Mediastreamings MSTR an ein anderes Telkommunikationsendgerät übertragen werden.

Der auf dem Telekommunikationsendgerät COM abgelegte Clientteil PIP kann weiters mit einem Multimedia-Ein/Ausgabegerät MMG verbunden sein.

Gemäß Fig. 2 kann auf Anforderung durch einen Benutzer das Benutzeroberflächenmodul GUI von einem Server SPS eines Serviceproviders auf das Telekommunikationsendgerät COM heruntergeladen und in einen Browser des Telekommunikationsendgerätes installiert werden.
Weiters kann der Clientteil PIP von dem Multimediatelekommunikationsserver SER über das Datennetz DAT auf das Telekommunikationsendgerät COM heruntergeladen werden.

Hierzu kann der Benutzer in den Browser BRO seines Telekommunikationssendgerätes COM die Adresse des Multimediatelekommunikationsservers SER in dem Datennetz DAT, beispielsweise eine IP-Adresse, eingeben und eine auf dem Multimediatelekommunikationsserver SER abgelegte Webseite gemäß dem TCP/IP Protokoll bzw. einem anderen Internet Protokoll, wie beispielsweise dem http-Protokoll auf sein Telekommunikationsendgerät COMA herunterladen.

Auf dieser Webseite kann der Benutzer beispielsweise die IP-Adresse seines Telekommunikationssendgerätes bzw. Informationen über den auf seinem Telekommunikationsendgerät COM installierten Browser BRO angeben und diese Informationen über das Datennetz, beispielsweise gemäß dem TCP/IP-Protokoll an den Multimediatelekommunikationsserver SER übermitteln.
Der Clientteil PIP kann hierauf von dem Multimediatelekommunikationsserver SER anhand dieser Informationen erzeugt, an das Telekommunikationsendgerät COM übertragen und dort installiert werden.

Anhand der übermittelten Informationen bezüglich des installierten Browsers BRO kann von dem Clientteil PIP der Multimediatelekommunikationsplattform SSUA das Interfacefile erzeugt werden und auf dem Telekommunikationssendgerät installiert werden. Das Interfacefile kann beispielsweise als Java Cookie beispielsweise als Text oder Binaryfile realisiert sein.

Unter Cookies werden kleine Textdateien in Browsern verstanden, die ein Server an einen Browser schickt. Darin kann beispielsweise das Verhalten des Nutzers registriert werden: Passwörter, persönliche Daten des Nutzers, welche Seiten er am häufigsten aufruft etc. Die Dateien werden gespeichert und beim nächsten Aufruf des Servers wieder abgerufen. Dies erleichtert Login-Prozeduren, kann aber auch benutzt werden, um Nutzungsgewohnheiten eines Besuchers zu protokollieren und Benutzerprofile zu erstellen. In Zusammenhang mit der Erfindung können Cookies dazu verwendet werden, Parameter bzw. Befehle für einen Multimediadatenaustausch entgegenzunehmen bzw. zu speichern.

Der Datenaustausch zwischen dem in dem Browser BRO installierten Benutzeroberflächenmodul GUI und der Multimedia-Plattform SSUA erfolgt, wie bereits oben erwähnt, über das lokal auf dem Telekommunikationsendgerät COM abgelegte Interface-File IFF.

In dieses Interfacefile IFF können von dem Benutzeroberflächenmodul GUI für die Durchführung einer Multimediatelekommunikation notwendigen Parameter bzw. Befehle geschrieben werden.

Die in das Interfacefile IFF geschriebenen Parameter bzw. Befehle können von dem auf dem Telekommunikationsendgerät COM abgelegten Clientteil PIP der Multimediakommunikationsplatt form SSUA ausgelesen werden.

Und an den Serverteil SP der Multimediaplattform SSUA über tragen werden.

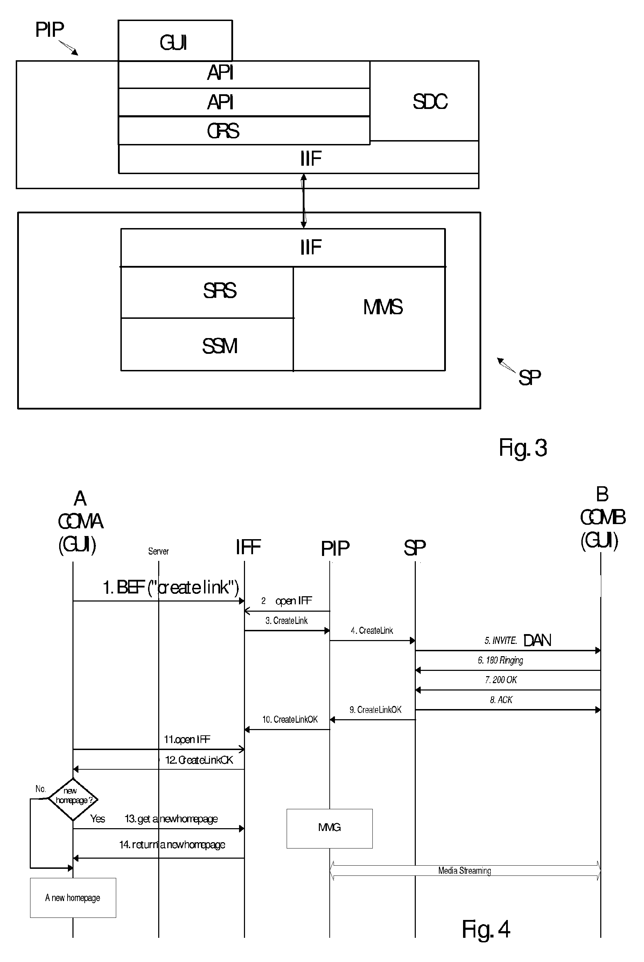

Gemäß Fig. 3 weist der auf dem Telekommunikationsendgerät COMA abgelegte Clientteil PIP der Multimediaplattform eine Schnittstelle IIF zu dem auf dem Multimediatelekommunikationsserver SER abgelegten Serverteil SP auf. Diese Schnitt stelle IIF kann ebenfalls ein Interfacefile und von gleichem Format wie das Interfacefile IFF sein. Der Clientteil PIP kann eine Steuerung SDC zur Übertragung von Streaming-Daten sowie eine Rufsteuerung CRS aufweisen.

Üblicherweise kann das Benutzeroberflächenmodul GUI, welches ein Programm sein kann, das eine Eingabemaske zur Eingabe von Daten auf einem Bildschirm des Telekommunikationsendgerätes COM erzeugt, über ein sogenanntes "Application Programming Interface" kurz API an den Clientteil PIP der Multimediatelekommunikationsplattform SSUA angebunden sein. Unter einem Application Programming Interface versteht man eine Schnitt stelle mit Befehlen, ggf. Routinen und/oder Makros, die von einem Betriebssystem oder einer Betriebssystemerweiterung (z.B. für die Benutzung eines Netzwerkes) bereitgestellt wird. Anwendungsprogramme können dann diese Schnittstelle benutzen, um das Betriebssystem zur Ausführung der dieser Schnittstelle verborgenen und durch sie bereitgestellten Aktionen zu veranlassen. Bekannte APIs sind beispielsweise die CAPI im ISDN oder die TAPI.

In der hier vorliegenden Variante der Erfindung werden die Aufgaben des API zwischen Benutzeroberflächenmodul GUI und Multimediatelekommunikationsplattform SSUA von dem Interfacefile IFF übernommen, wobei sowohl das Benutzeroberflächenmodul GUI als auch der Clientteil PIP das Interfacefile beschreiben und lesen können.

Das Interfacefile IFF des Clientteils PIP kann mit der Clientrufsteuerung CRS verbunden sein, welche dazu eingerich tet ist, Rufinformationen über die Schnittstelle IIF an den Serverteil SP zu übertragen.

Der Serverteil SP weist eine Serverrufsteuerung SRS auf, die dazu eingerichtet ist sowohl einen einfachen als auch einen erweiterten Ruf zu erzeugen, wobei ein einfacher Ruf bei spielsweise eine Sprachübertragung und unter einem erweiter ten Ruf eine Videoübertragung sein kann.

Die Serverrufsteuerung kann mit einer "SIP State Machine" SSM verbunden sein, die dazu eingerichtet ist Session Initiation Protocol Signalisierungen oder kurz SIP-Signalisierungen an ein angerufenes Telekommunikationsendgerät COM zu übermitteln und zu empfangen.
Das Session Initiation Protokoll bzw. SIP-Protokoll ist ein im März 1999 von der "Internet Engineering Task Force" vorge schlagener Standard für die Übertragung von Echtzeitdaten über paketgestützte Netze. Das SIP-Protokoll ist funktional vergleichbar dem H.323 Protokoll und kann interaktive Kommu nikationsdienste einschließlich Sprache über IP-Netze über tragen. Die SIP-Informationen können über TCP oder UDP trans portiert werden. SIP besitzt eine offene internetbasierende Struktur und ermöglicht CLASS-Features (Custom Local Area Signalling Service) wie etwa die Übermittlung der Identität des Anrufers oder die Anrufweiterleitung in IP-basierten Netzen. Durch die offene Struktur können neue Leistungsmerk male schneller und einfacher implementiert werden als beim konventionellen Standard-Telefonsystem PSTN. SIP ist verant wortlich für die Gesprächssignalisierung, das Lokalisieren von Anwendern und die Registrierung.

Weiters kann der Serverteil SP eine Multimediastreamingsteue rung MMS zur Steuerung einer Multimediastreaming-Datenübertragung MSTR aufweisen.

Zum Rufen eines Teilnehmers B durch einen Teilnehmer A muss der Teilnehmer A nach Fig. 4 z. B. die Rufnummer oder IP-Adresse des Teilnehmers B über eine Eingabemaske der in dem Browser BRO des anrufenden Telekommunikationsendgerätes in stallierten Benutzeroberflächenmoduls GUI eingeben.

Das Benutzeroberflächenmodul GUI des Telekommunikationsendgerätes COMA schreibt, wenn ein Teilnehmer A über dieses Telekommunikationsendgerät COMB einen Teilnehmer B ruft, einen entsprechenden Befehl, beispielsweise "create link", und einen entsprechenden Parameter, beispielsweise die Rufnummer bzw. die Adresse des Teilnehmers B, in das Interfacefile IFF.

Der auf dem anrufenden Telekommunikationsendgerät COMA abgelegte Clientteil PIPA öffnet das Interfacefile IFF und liest den Inhalt des Files, beispielsweise Zeile für Zeile aus. D. h. in dem konkreten Beispiel der Clientteil PIPA liest den Befehl "create link" und die Rufnummer des Teilnehmers B aus dem Interfacefile IFF aus.

Der Clientteil PIPA übermittelt den Befehl "create link" und die Rufnummer sodann an den Serverteil SP der Multimedia plattform SSUA. Der Serverteil sendet eine Datenaustauschini tialisierungsnachricht INVITE gemäß dem SIP-Protokoll an das Telekommunikationsendgerät des angerufenen Teilnehmers B, woraufhin eine SIP-Signalisierung zur Rufverbindung zwischen dem Serverteil SP und dem angerufenen Telekommunikationsendgerät erfolgt.

Nimmt der angerufene Teilnehmer B den Ruf des Teilnehmers A an, so kann der Teilnehmer B über das Benutzeroberflächenmo dul seines Telekommunikationsendgerätes COMB eine entspre chende Anforderung zur Annahme eingeben. Der Serverteil SP erhält in diesem Fall eine Rufannahmemeldung, beispielsweise "Ruf angenommen". Hierauf übermittelt der Serverteil SP beispielsweise die Meldung "create link OK" an den Clientteil PIPA des anrufenden Telekommunikationsendgerätes COMA.
Der Clientteil PIPA des anrufenden Telekommunikationsendgerä tes COMA schreibt die Meldung "create link OK" in das Inter facefile IFF. Das Benutzeroberflächenmodul GUI liest das Interfacefile IFF aus und kann die Meldung "create link OK" auf einer Ausgabeeinheit darstellen. Bei erfolgreichem Rufaufbau kann der Clientteil PIPA des anrufenden Telekommu nikationsendgerätes COMA ein das diesem verbundenes Mulitmedia-Ein/Ausgabegerät aktivieren.

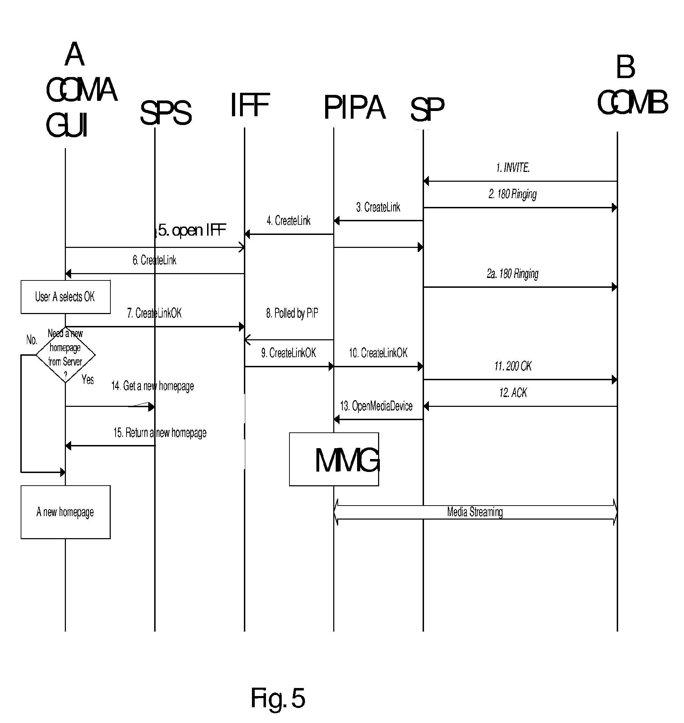

Wird der Teilnehmer A angerufen - sinngemäß gilt das im folgenden Gesagte für den Fall, dass der Teilnehmer B von dem Teilnehmer A angerufen wird, natürlich auch für den Teilnehmer B, so kann nach Fig. 5 der Teilnehmer B gemäß dem SIP-Protokoll eine Datenaustauschinitialisierungsnachricht INVITE an den Teilnehmer A übermitteln. Der Serverteil SP der Multimediatelekommunikationsplattform SSUA kann dem Teilnehmer B, beispielsweise mit einem SIP 180 Läuten, antworten. Der Serverteil SP sendet hierauf den Befehl "create link" an den Clientteil PIPA des Telekommunikationsendgerätes COMA übermitteln.

Der Clientteil PIPA schreibt hierauf den Befehl "create link" in das lokal auf dem Telekommunikationsendgerät COMA abgelegte Interfacefile IFF, worauf das Benutzeroberflächenmodul GUI das Interfacefile IFF ausliest. Eine entsprechende Meldung wird von dem Benutzeroberflächenmodul GUI erzeugt und es wird dem Teilnehmer A ermöglicht, den Ruf anzunehmen oder abzulehnen. Nimmt der Teilnehmer A den Ruf an, so schreibt das graphische Benutzeroberflächenmodul die Meldung "create link OK" in das Interfacefile.

Der Clientteil PIPA liest das Interfacefile IFF aus und sendet die Meldung "create link OK" an den Serverteil SP. Während der Zeitdauer dieser Vorgänge kann der Serverteil SP SIP-180 Ruftöne an den abrufenden Teilnehmer B.

Übermittelt der Serverpart SP eine SIP-200 OK-Meldung an den Teilnehmer B so sendet dieser eine Rufannahmemeldung ACK an den Serverpart.

Der Serverpart SP kann hierauf den Befehl "Open Media Device" zur Aktivierung des Multimedia-Ein/Ausgabegerätes an den Clientteil PIPA des angerufenen Telekommunikationsendgerätes COMA übermitteln und eine Multimediaverbindung zwischen den beiden Telekommunikationsendgeräten COMA, COMB ist hergestellt.

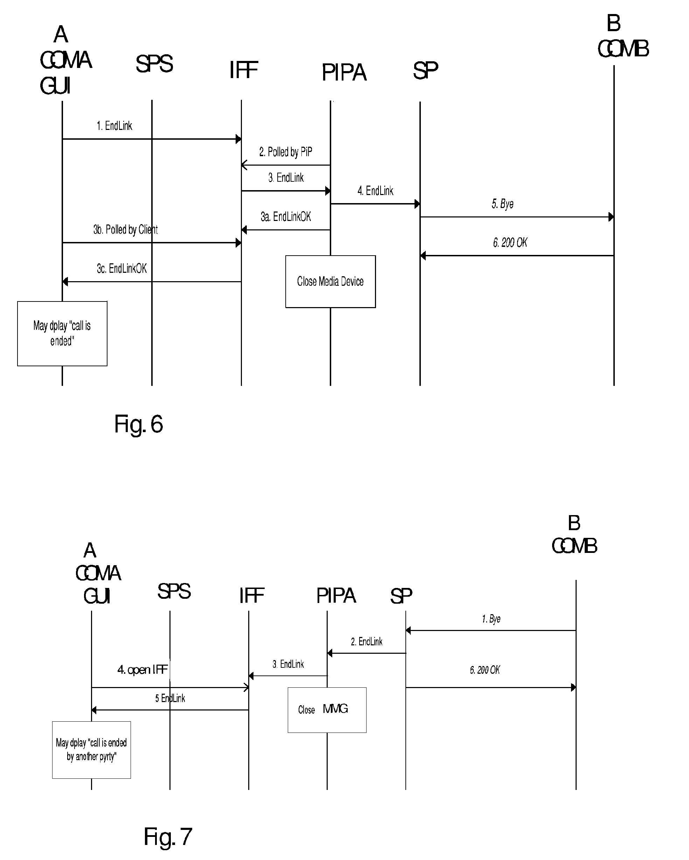

Wird eine Änderung des graphischen Benutzeroberflächenmoduls GUI notwendig, beispielsweise aufgrund einer Anpassung an eine Verbindungszustand On/Offline, so kann über das Telekommunikationsendgerät COMA, COMB eine neue Webseite mit den entsprechenden Benutzeroberflächenmoduldownload von dem Serviceproviderserver SPS heruntergeladen werden.
Wird eine Multimediaverbindung von dem Teilnehmer A beendet, so kann dieser nach Fig. 6 eine entsprechende Aufforderung über sein Benutzeroberflächenmodul GUI eingeben. Dieses schriebt den entsprechenden Befehl, beispielsweise "End Link" in das Interfacefile IFF. Der Clientteil PIPA und öffnet das Interfacefile IFF und liest den Befehl aus. Hierauf schreibt der Clientteil PIP beispielsweise die Meldung "End Link OK" in das Interfacefile. Hierauf öffnet das Benutzeroberflächenmodul GUI das Interfacefile IFF und kann beispielsweise die Meldung "Ruf ist beendet" ausgeben.

Der Clientteil PIPA sendet den Befehl "End Link" an den Serverteil SP und deaktiviert das Multimedia-Ein/Ausgabegerät MMG.

Der Serverteil SP sendet beispielsweise eine SIP-Beendigungsmeldung BYE an das Telekommunikationsendgerät COMB des Teilnehmers B. Der Teilnehmer B kann den Ruf beispielsweise durch eine SIP-200 OK Meldung beenden.

Wird der Ruf von dem Teilnehmer B beendet, so kann nach Fig. 7 von dem Telekommunikationsendgerät COMB dieses Teilnehmers B eine SIP-Beendigungsnachricht BYE an das Telekommunikationsendgerät COMA des Teilnehmers A gesendet werden.

Hierzu wird die SIP-Beendigungsnachricht BYE von dem Client teil PIPB des Telekommunikationsendgerätes B an den Server teil SP der Multimediatelekommunikationsplattform SSUA über mittelt. Der Serverteil sendet dann einen entsprechenden Befehl, beispielsweise "End Link" an den Clientteil PIPA des Telekommunikationsendgerätes COMA, wobei der Clientteil PIPA den Befehl "End Link" in das Interfacefile IFF schreibt. Das Benutzeroberflächenmodul GUI öffnet hierauf das Interfacefile und liest den Befehl "End Link", wobei es eine entsprechende Ausgabemeldung, beispielsweise "Der Ruf wurde von dem anderen Teilnehmer beendet", erzeugen kann. Die Telekommunikations endgeräte COMA, COMB können beide ein Benutzeroberflächenmodul GUI aufweisen, welches gemäß der Erfindung - über ein Interfacefile IFF - mit der Multimediaplattform SSUA Daten austauschen kann. Es kann aber auch der Fall sein, dass nur eines der Telekommunikationsendgeräte COMA, COMB auf die soeben erwähnte Art ausgebildet ist, wobei das andere Telekommunikationsendgerät nur dazu eingerichtet sein muss, Multimedianachrichten gemäß dem SIP- bzw. H.323 Protokoll auszutauschen

## Patentansprüche

1. Verfahren zum Austausch von Daten in einem Multimediatelekommunikationssystem (SYS) mit zumindest einem Telekommunikationsendgerät (COM, COMA, COMB) und einer zu einer multimedialen Nachrichtenübertragung in einem Datennetz (DAT) eingerichteten Multimediakommunikationsplattform (SSUA), wobei das Telekommunikationsendgerät (COM, COMA, COMB) ein graphisches Benutzeroberflächenmodul (GUI) aufweist,
**dadurch gekennzeichnet,**
**dass** ein Datenaustausch zwischen dem Benutzeroberflächenmodul (GUI) und der Multimedia-Plattform (SSUA) über ein lokal auf dem Telekommunikationsendgerät (COM) abgelegtes Interface-File (IFF) erfolgt.

2. Verfahren nach Anspruch 1,
**dadurch gekennzeichnet,**
**dass** das Interfacefile (IFF) ein Text- oder Binaryfile ist.

3. Verfahren nach Anspruch 1 oder 2,
**dadurch gekennzeichnet,**
**dass** das Benutzeroberflächenmodul (GUI) auf Anforderung von einem einem Service Provider zugeordneten Server (SPS) auf das Telekommunikationsendgerät (COM) über das Datennetz (DAT) übertragen wird und dort als Plugin oder Java Applet in einen Browser (BRO), der zur Darstellung von in dem Datennetz (DAT) abgelegten Webseiten eingerichtet ist, installiert wird.

4. Verfahren nach Anspruch 2 oder 3,
**dadurch gekennzeichnet,**
**dass** die Multimediakommunikationsplattform (SSUA) zumindest einen auf dem zumindest einen Telekommunikationsendgerät abgelegten Clientteil (PIP) und einem auf einem Multimediaserver (SER) abgelegten Serverteil (SP) aufweist, wobei diese beiden Teile der Multimediakommunikationsplattform (SSUA) dazu eingerichtet sind, miteinander Daten auszutauschen.

5. Verfahren nach Anspruch 4,
**dadurch gekennzeichnet,**
**dass** auf Anforderung der Clientteil (PIP) von dem Multimediatelekommunikationsserver (SER) über das Datennetz (DAT) auf das Telekommunikationsendgerät (COM) heruntergeladen wird.

6. Verfahren nach einem der Anspruch 4 oder 5,
**dadurch gekennzeichnet,**
**dass** der Clientteil (PIP) das Interfacefile (IFF) erzeugt und liest.

7. Verfahren nach einem der Ansprüche 1 bis 6,
**dadurch gekennzeichnet,**
**dass** das Datennetz (DAT) das Internet ist.

8. Verfahren nach einem der Ansprüche 1 bis 7,
**dadurch gekennzeichnet,**
**dass** das Telekommunikationsendgerät (COM) seine Adresse in dem Datennetz (DAT) an den Multimediatelekommunikationsserver (SER) überträgt.

9. Verfahren nach einem der Ansprüche 1 bis 8,
**dadurch gekennzeichnet,**
**dass** das Telekommunikationsendgerät (COM) Informationen über den Typ seines Browsers (BRO) an den Multimediatelekommunikationsserver (SER) überträgt.

10. Verfahren nach Anspruch 8 oder 9,
**dadurch gekennzeichnet,**
**dass** der Multimediatelekommunikationsserver (SER) anhand der an ihn von dem Telekommunikationsendgerät (COM) übermittelten Informationen den Clientteil (PIP) erzeugt und an das Telekommunikationsendgerät (COM) überträgt.

11. Verfahren nach einem der Ansprüche 1 bis 10,
**dadurch gekennzeichnet,**
**dass** zumindest zwei Telekommunikationsendgeräte (COMA, COMB) vorgesehen sind, die zum gegenseitigen Austausch von Daten über das Datennetz (DAT) eingerichtet sind, wobei zumindest ein erstes der Telekommunikationsendgeräte (COMA) ein mit der Multimediaplattform über das Interfacefile (IFF) verbundenes Benutzeroberflächenmodul (GUI) aufweist, und über dieses Oberflächenmodul ein Befehl (BEF) zur Erzeugung einer Verbindung zwischen den Telekommunikationsendgeräten und eine Adresse eines zweiten Telekommunikationsendgerätes (COMB) eingegeben und in das Interfacefile geschrieben werden, worauf der Clientteil (PIP) des ersten Telekommunikationsendgerätes (COMA) das Interfacefile ausliest und den Befehl (BEF) und die Adresse an den Serverteil (SP) übermittelt, wobei der Multimediaserver (SER) eine Datenaustauschinitialisierungsnachricht (DAN) an das zweite Telekommunikationsendgerät (COMB) übermittelt, und nach Zustellung der Datenaustauschinitialisierungsnachricht (DAN) an das zweite Telekommunikationsendgerät (COMB) Multimedianachrichten (NAR) zwischen den Telekommunikationsendgeräten (COMA, COMB) über die Multimediatelekommunikationsplattform (SSUA) austauschbar sind.

12. Verfahren nach einem der Ansprüche 1 bis 10,
**dadurch gekennzeichnet,**
**dass** zumindest zwei Telekommunikationsendgeräte (COMA, COMB) vorgesehen sind, die zum gegenseitigen Austausch von Daten über das Datennetz (DAT) eingerichtet sind, wobei zumindest ein erstes der Telekommunikationsendgeräte (COMA) ein mit der Multimediaplattform über das Interfacefile (IFF) verbundenes Benutzeroberflächenmodul (GUI) aufweist, und von einem zweiten Telekommunikationsendgerät eine Datenaustauschinitialisierungsnachricht an den Serverteil (SP) der Multimediatelekommunikationsplattform (SSUA) übermittelt wird, worauf der Serverteil (SP) einen Befehl (BEF) zur Erzeugung einer Verbindung zwischen den beiden Telekommunikationsendgeräten (COMA, COMB) an den Clientteil (PIP) des ersten Telekommunikationsendgerätes (COMA, COMB) übermittelt, der den Befehl (BEF) in das Interfacefile (IFF) des angerufenen Telekommunikationsendgerätes (COMA) schreibt und das Interfacefile (IFF) von dem Benutzeroberflächenmodul (GUI) ausgelesen wird, wobei nach Auslesen des Befehls (BEF) Multimedianachrichten (NAR) zwischen den beiden Telekommunikationsendgeräten (COMA, COMB) über die Multimediakommunikationsplattform (SSUA) austauschbar sind.

13. Verfahren nach Anspruch 11 oder 12,
**dadurch gekennzeichnet,**
**dass** der Nachrichtenaustausch zwischen den beiden Telekommunikationsendgeräten in Form eines Mediastreamings (MSTR) erfolgt.

14. Verfahren nach einem der Ansprüche 11 bis 13,
**dadurch gekennzeichnet,**
**dass** der Befehl (BEF) zur Herstellung einer Verbindung zwischen den Telekommunikationsendgeräten (COMA, COMB) an den Clientteil (PIP, PIPA) des angerufenen Telekommunikationsendgerätes (COMA, COMB) übermittelt und von diesem Clientteil in das lokal auf dem angerufenen Telekommunikationsendgerät (COMA, COMB) abgelegte Interfacefile (IFF) geschrieben und von dem graphischen Benutzeroberflächenmodul (GUI) ausgelesen und eine Ausgabemeldung, dass das anrufende Telekommunikationsendgerät (COMA, COMB) einen Nachrichtenaustausch initialisiert hat, erzeugt wird.

15. Verfahren nach Anspruch 14,
**dadurch gekennzeichnet,**
**dass** über das Benutzeroberflächenmodul (GUI) des angerufenen Telekommunikationsendgerätes (COMA, COMB) ein Befehl zur Annahme oder zur Ablehnung des Nachrichtenaustausches mit dem anrufenden Telekommunikationsendgerätes (COMA, COMB) eingegeben wird.

16. Verfahren nach einem der Ansprüche 4 bis 15,
**dadurch gekennzeichnet,**
**dass** der Datenaustausch zwischen dem Serverteil (SP) und dem zumindest einem Clientteil (PIP) der Multimediatelekommunikationsplattform (SSUA) über eine interne Schnittstelle (IIF) der Multimediakommunikationsplattform (SSUA) erfolgt.

17. Verfahren nach einem der Anspruch 15,
**dadurch gekennzeichnet,**
**dass** die interne Schnittstelle (IIF) ein Interfacefile ist.

18. Verfahren nach einem der Ansprüche 15 bis 17,
**dadurch gekennzeichnet,**
**dass** bei Eingabe eines Befehls zur Annahme des Nachrichtenaustausches mit dem anrufenden Telekommunikationsendgerät (COMA, COMB) der Clientteil (PIP) des angerufenen Telekommunikationsendgerätes (COMA, COMB) eine Nachricht zur Herstellung einer Datenverbindung zwischen dem Clientteil (PIP) des anrufenden Telekommunikationsendgerätes (COMA, COMB) und dem Clientteil (PIPA) des angerufenen Telekommunikationsendgerätes (COMB) an den Serverteil (SP) der Multimediakommunikationsplattform (SSUA) übermittelt.

19. Verfahren nach einem der Ansprüche 11 bis 18,
**dadurch gekennzeichnet,**
**dass** an jeden Clientteil (PIP, PIPA) der Multimediaplattform (SSUA) je zumindest ein Multimedia-Ein/Ausgabegerät (MMG) angeschlossen ist.

20. Verfahren nach einem der Ansprüche 11 bis 19,
**dadurch gekennzeichnet,**
**dass** die Datenübertragung zwischen den Telekommunikationsendgeräten (COMA, COMB) nach einem SIP-Protokoll erfolgt.

21. Verfahren nach einem der Ansprüche 11 bis 20,
**dadurch gekennzeichnet,**
**dass** die Datenübertragung zwischen den Telekommunikationsendgeräten (COMA, COMB) nach einem H.323 Protokoll erfolgt.

22. Multimediatelekommunikationssystem (SYS) mit einer zur multimedialen Nachrichtenübertragung vorgesehenen Multimediakommunikationsplattform (SSUA) und einem Datennetz (DAT) mit zumindest einem Telekommunikationsendgerät (COM), welches ein graphisches Benutzeroberflächenmodul (GUI) aufweist,
**dadurch gekennzeichnet,**
**dass** Multimediatelekommunikationssystem (SYS) dazu eingerichtet ist, den Datenaustausch zwischen dem Benutzeroberflächenmodul (GUI) und der Multimediakommunikationsplattform (SSUA) über ein lokal auf dem Telekommunikationsendgerät (COM) abgelegtes Interface-File (IFF) durchzuführen.

23. Multimediatelekommunikationssystem nach Anspruch 22,
**dadurch gekennzeichnet,**
**dass** das Interfacefile (IFF) ein Text- oder Binaryfile ist.

24. Multimediatelekommunikationssystem (SYS) nach Anspruch 22 oder 23,
**dadurch gekennzeichnet,**
**dass** es dazu eingerichtet ist, auf Anforderung das Benutzeroberflächenmodul (GUI) von einem einem Serviceprovider zugeordneten Server (SER) auf das zumindest eine Telekommunikationsendgerät (COMA, COMB) über das Datennetz (DAT) zu übertragen und dort als Plugin oder Java Applet in den Browser (BRO) zu installieren.

25. Multimediatelekommunikationssystem nach Anspruch 22 bis 24,
**dadurch gekennzeichnet,**
**dass** die Multimediakommunikationsplattform (SSUA) einen auf dem Telekommunikationsendgerät (COM) abgelegten Clientteil (PIP) und einen auf einem Multimediaserver (SER) abgelegten Serverteil (SP) aufweist, wobei diese beiden Teile der Multimediaplattform (SSUA) dazu eingerichtet sind, miteinander Daten auszutauschen.

26. Multimediatelekommunikationssystem nach Anspruch 25,
**dadurch gekennzeichnet,**
**dass** das Telekommunikationsendgerät (COM) dazu eingerichtet ist, den Clientteil (PIP) von dem Multimediatelekommunikationsserver (SER) über das Datennetz (DAT) herunterzuladen.

27. Multimediatelekommunikationssystem nach Anspruch 25 oder 26,
**dadurch gekennzeichnet,**
**dass** der Clientteil (PIP) dazu eingerichtet ist, das Interfacefile (IFF) zu erzeugen und zu lesen.

28. Multimediatelekommunikationssystem nach einem der Ansprüche 22 bis 27,
**dadurch gekennzeichnet**,
das Datennetz (DAT) das Internet ist.

29. Multimediatelekommunikationssystem nach einem der Ansprüche 22 bis 28,
**dadurch gekennzeichnet,**
**dass** das Telekommunikationsendgerät (COM) dazu eingerichtet ist, seine Adresse in dem Datennetz an den Multimediatelekommunikationsserver (SER) zu übertragen.

30. Multimediatelekommunikationssystem nach einem der Ansprüche 22 bis 29,
**dadurch gekennzeichnet,**
**dass** das Telekommunikationsendgerät (COM) dazu eingerichtet ist, Informationen über den Typ seines Browsers (BRO) an den Multimediaserver (SER) zu übertragen.

31. Multimediatelekommunikationssystem nach Anspruch 30,
**dadurch gekennzeichnet,**
**dass** der Multimediatelekommunikationsserver (SER) dazu eingerichtet ist, anhand der an ihn von dem Computer (COM) übermittelten, den Browser (BRO) betreffenden Informationen den Clientteil (PIP) zu erzeugen und an das Telekommunikationsendgerät (COM) zu übertragen.

32. Multimediatelekommunikationssystem nach einem der Ansprüche 22 bis 31,
**dadurch gekennzeichnet,**
**dass** zumindest zwei Telekommunikationsendgeräte (COMA, COMB) vorgesehen sind, die dazu eingerichtet sind, über das Datennetz (DAT) und die Multimediatelekommunikationsplattform (SSUA) miteinander Daten auszutauschen, wobei zumindest ein erstes Telekommunikationsendgerät (COMA) ein graphisches Benutzeroberflächenmodul (GUI) aufweist, und das Multimediatelekommunikationssystem (SSUA) dazu eingerichtet ist, einen Befehl (BEF) zur Erzeugung einer Verbindung zwischen dem ersten Telekommunikationsendgerät (COMA) und einem von diesem angerufenen, zweiten Telekommunikationsendgerät (COMB) sowie die Adresse des zweiten Telekommunikationsendgerätes (COMB) in dem Datennetz (DAT) über das graphische Benutzeroberflächenmodul (GUI) des ersten Telekommunikationsendgerätes (COMA, COMB) entgegenzunehmen und in das Interface-File (IFF) des ersten Telekommunikationsendgerätes (COMA, COMB) zu schreiben, wobei der Clientteil (PIP) des anrufenden Telekommunikationsendgerätes (COMA), dazu eingerichtet ist, das Interfacefile (IFF) auszulesen und den Befehl (BEF) und die Adresse des zweiten Telekommunikationsendgerätes (COMB) an den Serverteil (SP) der Multimediatelekommunikationsplattform (SSUA) zu übermitteln, und der Multimediatelekommunikationsserver (SER) dazu eingerichtet ist, bei Erhalt der Adresse (ADR) und des Befehls (BEF) eine Datenaustauschinitialisierungsnachricht (DAN) zu erzeugen und an das zweite Telekommunikationsendgerät (COMB) zu übermitteln, wobei das Multimediatelekommunikationssystem (SYS) weiters dazu eingerichtet ist, nach Zustellung der Datenaustauschinitialisierungsnachricht (DAN) über die Multimediakommunikationsplattform (SSUA) Multmedianachrichten (NAR) zwischen den beiden Telekommunikationsendgeräten (COMA, COMB) auszutauschen.

33. Multimediatelekommunikationssystem nach Anspruch 32,
**dadurch gekennzeichnet,**
**dass** es dazu eingerichtet ist, von dem zweiten Telekommunikationsendgerät eine Datenaustauschinitialisierungsnachricht (DAN) an den Serverteil (SP) der Multimediatelekommunikationsplattform (SSUA) zu übermitteln, wobei der Serverteil (SP) dazu eingerichtet ist, einen Befehl (BEF) zur Erzeugung einer Verbindung zwischen den beiden Telekommunikationsendgeräten (COMA, COMB) an den Clientteil (PIP) des ersten Telekommunikationsendgerätes (COMA, COMB) zu übermitteln, der dazu eingerichtet ist, den Befehl (BEF) in das Interfacefile (IFF) des angerufenen Telekommunikationsendgerätes (COMA) zu schreiben, wobei das Benutzeroberflächenmodul (GUI) dazu eingerichtet sein kann, das Interfacefile (IFF) auszulesen, und das Multimediatelekommunikationssystem (SYS) weiters dazu eingerichtet ist, nach Auslesen des Befehls (BEF) Multimedianachrichten (NAR) zwischen den beiden Telekommunikationsendgeräten (COMA, COMB) über die Multimediakommunikationsplattform (SSUA) auszutauschen.

34. Multimediatelekommunikationssystem nach Anspruch 32 oder 33,
**dadurch gekennzeichnet,**
**dass** es dazu eingerichtet ist, die Nachrichten zwischen den beiden Telekommunikationsendgeräten (COMA, COMB) in Form eines Mediastreaming (MSTR) auszutauschen.

35. Multimediatelekommunikationssystem nach einem der Ansprüche 32 bis 34,
**dadurch gekennzeichnet,**
**dass** es dazu eingerichtet ist, den Befehl (BEF) an den Clientteil (PIPB) des angerufenen Telekommunikationsendgerätes (COMB) zu übermitteln, und der Clientteil (PIPB) dazu eingerichtet ist den Befehl (BEF) in das lokale Interfacefile (IFFB) des angerufenen Telekommunikationsendgerätes (COMB) zu schreiben, wobei das graphische Benutzeroberflächenmodul (GUIB) dazu eingerichtet ist, den Befehl (BEF) auszulesen und eine Ausgabemeldung zu erzeugen, dass das anrufende Telekommunikationsendgerät (COMA) einen Nachrichtenaustausch initialisiert hat.

36. Multimediatelekommunikationssystem nach einem der Ansprüche 32 bis 35,
**dadurch gekennzeichnet,**
**dass** das Benutzeroberflächenmodul (GUIB) des angerufenen Telekommunikationsendgerätes (COMB) dazu eingerichtet ist, eine Anforderung zur Annahme oder zur Ablehnung des Nachrichtenaustausches mit dem anrufenden Telekommunikationsendgerät (COMA) entgegenzunehmen.

37. Multimediatelekommunikationssystem nach einem der Ansprüche 32 bis 36,
**dadurch gekennzeichnet,**
**dass** es dazu eingerichtet ist, bei Eingabe der Anforderung zur Annahme des Nachrichtenaustausches dem Serverteil (SP) der Multimediakommunikationsplattform (SSUA) eine Nachricht zur Herstellung einer Datenverbindung zwischen dem Clientteil (PIPA) des anrufenden Telekommunikationsendgerätes (COMA) und dem angerufenen Telekommunikationsendgerätes (COMB) zu übermitteln.

38. Multimediatelekommunikationssystem nach einem der Ansprüche 32 bis 37,
**dadurch gekennzeichnet,**
**dass** an die Clientteile (PIPA, PIPB) der Multimediakommunikationsplattform (SSUA) je zumindest ein Multimedia-Ein/ausgabegerät angeschlossen ist.

39. Multimediatelekommunikationssystem nach einem der Ansprüche 22 bis 38,
**dadurch gekennzeichnet,**
**dass** die Multimediaplattform (SSUA) dazu eingerichtet ist, den Datenaustausch zwischen dem Serverteil (SP) und den Cliententeilen (PIPA, PIPB) über eine interne Schnittstelle (IIF) der Multimediakommunikationsplattform (SSUA) durchzuführen.

40. Multimediatelekommunikationssystem nach Anspruch 39,
**dadurch gekennzeichnet,**
**dass** die interne Schnittstelle (IIF) ein Interfacefile ist.

41. Multimediatelekommunikationssystem nach einem der Ansprüche 32 bis 40,
**dadurch gekennzeichnet,**
**dass** es dazu eingerichtet ist, den Datenaustausch zwischen den Telekommunikationsendgeräten (COMA, COMB) gemäß einem SIP-Protokoll durchzuführen.

42. Multimediatelekommunikationssystem nach einem der Ansprüche 32 bis 40,
**dadurch gekennzeichnet,**
**dass** es dazu eingerichtet ist den Datenaustausch zwischen den Telekommunikationsendgeräten nach einem H.323 Protokoll durchzuführen.
